# EUROPEAN PATENT APPLICATION

(11) **EP 1 983 039 A1**
(43) Date of publication of application: **22.10.2008**
(21) Application number: 07704733.0
(22) Date of filing: 18.01.2007
(51) Int. Cl.: C10L 1/02, C11C 3/10

(54) **METHOD FOR OBTAINING A BIODIESEL FROM VEGETABLE OILS OF VARIABLE ACIDITY DEGREE IN A CONTINUOUS SYSTEM AND BIODIESEL FUEL OBTAINED**

(30) Priority: 20.01.2006 ES 200600135
(71) Applicant: Biodiesel de Andalucia 2004, S.A., 41420 Fuentes de Andalucia (Sevilla) (ES); Lebron Parejo, José David, 41420 Fuentes de Andalucia (Sevilla) (ES); Garcia Ruz, Cristobal, 41420 Fuentes de Andalucia (Sevilla) (ES)
(72) Inventor: LEBRÓN PAREJO, José David, 41420 FUENTES DE ANDALUCÍA (SEVILLA) (ES); GARCÍA RUZ, Cristóbal, 41420 Fuentes de Andalucía (Sevilla) (ES)
(74) Representative: Elzaburu Marquez, Alberto
(86) International application number: PCT/ES2007/000019
(87) International publication number: WO 2007/082971

(57) **Abstract**

Method for obtaining a biodiesel in a continuous system from vegetable oils of variable degree of acidity, whereby, in a first step, a specific blend of vegetable oils of variable degree of acidity and methanol or ethanol are subjected to pressure and to heat in a multiple and continuous horizontal modular tube reactor, in the presence of a strong acid as catalyst, until a vegetable oil with an acidity of less than 1% is obtained. In a second step, this oil is transesterified by being blended with sodium or potassium methoxide, the glycerol being separated out, leaving glycerol on the one hand and, on the other, biodiesel, which, once purified and scrubbed, will be suitable for use in engines. The number of modules, both in the first and in the second step, is a function of the system's capacity.

## Description

The present invention relates to a method by which a clean biodiesel suitable for use as fuel for engines, especially for automotive engines, is obtained from vegetable oils or animal fats of different degrees of acidity, which are submitted to continuous processes of homogenization and transesterification. It also relates to the industrial plant required for this method and to the biodiesel thus obtained.

The patent that is the object of this invention has its field of application in the processing industry for alternative engine fuels, specifically fuel obtained from vegetable oils and from animal fats, called biodiesel, which can be used not only as an additive in hydrocarbon-derived fuels, but also can be used generally for engines whose design makes it possible to replace the hydrocarbon diesel that they use with a substitute for this, or what has come to be known as alternative fuels.

Production of alternative fuels capable of replacing petroleum derivatives, partially as additives or completely as fuels, is an old objective that is supported by numerous reasons. Among the main reasons, we should mention the instability of the price of petroleum, the progressive depletion of reserves, the excessive energy dependence of the consumer countries in relation to the producers, the emissions of carbon dioxide, carbon monoxide, sulphur dioxide and nitrogen, polycyclic aromatic hydrocarbons derived from benzene and particles, which are all factors causing the pollution of cities and the mechanical deterioration of vehicles.

This is why there have been numerous attempts to obtain alternative fuels, in particular the use of alcohols, as described in document U 271553, despite the difficulties presented by its resistance to preignition, and moreover the strong resistance to detonation caused by high temperature and pressures, so that tests conducted with ethanol and methanol, despite significant changes made to the engine or the fact that they were used as additives, have not given attractive results.

There have also been numerous attempts to obtain additives whose composition includes metallic compounds of the platinum group, as superior catalysts for improving the fuel efficiency and reducing harmful emissions. However, a constant stumbling block is the instability of these compounds for their packaging and supply to the engine, and the fact that they do not possess sufficient solubility in the fuel and insolubility in the water that may be present in the fuel. Thus, documents USA-2,086,775 and US-A-2,151,432 of Lyons and McKone, or US-A-4,295,816 of Robinson or DE-A-2,500,683 of Brantl, despite describing a great variety of catalytic metals that can be added to hydrocarbon fuels for reducing nitrogen monoxide and oxidizing carbon monoxide at the time of combustion, were not able to solve this problem.

European patent 90901945 deals with providing a solution to the problem outlined above, although once again the instability of the platinum compounds and the presence of halides add significant disadvantages for making the design viable.

Among the compounds of the inventions cited above and in general, in the known additives, solvents are included for improving solubility, which have the drawback that they damage the engine and ethers, or plant-derived alcohols, additives which by themselves are not able to start the engine, but they clean the carburettors and the injectors, improve the liquids and their circuits. One of their drawbacks is their high price.

Among the latter, the plant-derived additives, biodiesel stands out, as methods are known for production thereof, which starting from vegetable oils with particular characteristics and variety and a certain degree of acidity always less than one, achieve a biodiesel of standard quality.

Other methods are also known in which biodiesel is obtained from used oil, from which the fatty acids are removed either by extraction thereof or by saponification or acidic esterification. Extraction requires assembling a complicated and expensive system of physical separation, and there is also the inconvenience of subsequent marketing of the fatty acids for use in the food industry. In the case of saponification, the fatty acids are converted to soaps, and are thus removed from the process. However, the truth is that this process leads to depreciation of the final product, since there is a loss of value of the useful raw material, as a good part of the latter is converted to soaps, of much lower commercial value than biodiesel.

In the case of acidic esterification, the main disadvantage of this method is its high cost, since distillation of the oil once the process has ended requires raising its temperature above a hundred degrees for a sufficient time in order to remove water and excess methanol, with the risk of decomposition of the product obtained. However, another secondary disadvantage is that it is a batch processing system, in which it is necessary to wait for the completion of one batch before beginning the next. And the problem of these reactions on a large scale, in large reactors using reagents that are not soluble in oil, and instead the chemical reaction takes place by molecular contact, is that they are very time-consuming and hence expensive.

Something that makes the problem of dead times and the resultant costs even worse is that if the desired or standard quality is not obtained in a reactor, the process must be scrapped or restarted in its entirety, i.e. with the entire volume of product, instead of only the part corresponding to the stage of the process in which it occurs, if the process is continuous. Moreover, if a reactor breaks down, all production is paralysed, and if it is not possible to reduce the acidity to the desired degree in the time specified for this, the reactor has to continue in operation with the entire mass until it is achieved. Also, if it is necessary to rectify or adjust the chemical process by adding reagents, these have to be added in an amount that covers the entire mass. Consequently, significant advantages of the present invention are derived from operation in continuous modular processes, in which each module functions as an independent reactor although connected in series to the other modules, in such a way that in the case of breakdown, delay in reaction or need for correction, this does not affect the whole of production nor the whole mass being processed.

The shortcomings described above are overcome with the invention that is proposed in this specification, comprising a method of production of biodiesel in which vegetable oils or animal fats of variable acidity are submitted to processes of homogenization and acidic esterification in a continuous modular system, and then to a process of transesterification, the method of production of biodiesel comprising two stages.

First stage: Stage of homogenization of the vegetable oil or of the animal fat of variable acidity.

In this stage there is a gradual decrease in acidity of the vegetable oil or of the animal fat until it reaches less than one degree. In a continuous multiple horizontal modular tubular reactor in which each module is horizontal and is subject to pressure and temperature varying from 45 to 90 degrees, vegetable oil of more than one degree of acidity is mixed with methanol in stoichiometric proportions from 1:50 to 1:300 relative to the free fatty acids present in the medium, in the presence of a strong acid as catalyst, for example sulphuric acid, at the rate of 1 to 10 grams per kilogram of oil. Each of the modules is equipped with a system for evacuation of gases (steam and methanol or ethanol), controlled by electronic valves and assisted by injection of air, nitrogen or other inert gas that promotes evacuation even more, which flows through a pipe that runs from the upper zone of the module to a distillation column in which the alcohol condenses and is returned to the industrial process. The outflow of gases is periodical and is linked to passage of the oil from one module to the next. As the outflow and control of gases is one of the problems that always needs to be solved, in one embodiment of the esterification process different from that presented initially, for the case when a single conventional reactor is used, we propose controlled extraction of these gases spread over time, assisted by injection of air, nitrogen or other inert gas. After evacuation of gases, and immediately before restarting the process, methanol or ethanol are incorporated in a proportion equivalent to that evacuated.

The modules of the tubular reactor form a series whose number depends on the processing capacity of the industrial plant. Each module has a capacity between approx. 300 and 400 kg of vegetable oil and is enclosed in a jacket through which hot water circulates, to provide a suitable temperature for the process or working temperature, which is about 60 degrees with peaks of up to 105 degrees, to facilitate evacuation of the gases.

The modules are joined together via four-way or multiple-way valves, which permit both vertical and horizontal connection by means of said valves, making possible the feed of oil, methanol, sulphuric acid and air, nitrogen or other inert gas into each module and cleaning water, as well as the outflow of gases to the distillation column and of oil that convey these to the next module.

Each module incorporates a reaction control system that indicates the state of the reaction, a pressure sensor, a temperature sensor and a filling volume indicator, all integrated in an electronic circuit that controls the process.

Passage from one module to another is programmed in relation to the rating of the oil, waiting for the reaction to progress, so that between one module and the next there is a gradual decline in the rating of the vegetable oil.

Each module, constituted of material resistant to pressure and to the chemical reagents used, consists of three basic elements: the receiving pipe for oil plus reagents, the heating chamber that surrounds it and a system of collars perforated in the centre and joined together by rods that move uniformly through the pipe, actuated by a piston driven by an electric motor, which, in alternative embodiments of the present invention, can also be a hydraulic or pneumatic motor. Also in an alternative embodiment of this method, it is possible to start with animal fats instead of vegetable oils, obtaining similar results.

With this first stage, starting from a vegetable oil with acidity of more than one degree, one with acidity of less than one degree is obtained.

Second stage: Transesterification or basic (or alkaline) esterification of the vegetable oil with acidity of less than one degree.

Vegetable oil with acidity of -1° is mixed with sodium or potassium methoxide in stoichiometric proportions from 1:6 to 1:50 at a temperature between 45 and 60 degrees centigrade in a multiple modular vertical reactor, in which each module consists of a vertical pipe made of materials resistant to pressure and to the reagents used, that incorporates within it a series of fixed collars perforated in the centre through which the oil moves upwards or downwards by the action of the head of a piston or of a connecting-rod actuated by an electric, hydraulic or pneumatic motor. Feed of raw material and reagents is effected via the chamber in which the head of the piston or connecting-rod moves, in which valves can be installed that permit passage of the liquid, when it moves back, resulting in discharge of its contents. These valves remain closed when the piston head rises, the period in which filling of the chamber takes place. The valves can be replaced or supplemented with nozzles. A heating chamber that encloses the cylinder of the module in the manner of a jacket maintains the zone at the working temperature. An inlet pipe provided in its turn with a non-return valve fills the space of the empty chamber with oil on the upward stroke of the piston head. In the main chamber of the module, as the level of the liquid rises, alcohol vapours appear and are conveyed through a pipe located in its highest zone to a refrigerated line that condenses the gases for their immediate return. The module has a cap at its upper end, as well as a system for water inlet and outlet for washing for cleaning purposes.

A top opening connects the module to a pipe by which the product leaves at least at the same rate that it enters, being led to an intermediate tank in which the glycerol phase is decanted. At the bottom of this intermediate tank there is a density or turbidity sensor, which is activated in the presence of glycerol, permitting the latter to leave, to go to a collector in which the glycerol extracted from all the modules is collected. The intermediate tank also has a pipe at its top, by which the product leaves to go to the next module, with characteristics similar to that described. The number of modules is a function of the industrial production capacity.

Throughout this stage, the glycerol is separated, finally achieving maximum separation of the two phases, i.e. a product in which the initial oil has disappeared leaving biodiesel on the one hand, and glycerol on the other hand, together with salts of the acids used, as well as a large proportion of the excess alcohol. The glycerol collected in the collector passes through a heat exchanger and from there to a tank at 80°C, in which alcohol in gaseous form separates from it, and is led to a distillation column. This operation is supported by injection of air, nitrogen or other inert gas.

The biodiesel leaving the last of the modules that make up this second stage has been separated from glycerol, but contains alcohol residues, therefore it is passed through a heat exchanger at 80°C and empties into a tank, in which the gases from the alcohol are separated from the biodiesel and are directed to the distillation column, in which the methanol or ethanol is recovered for reuse.

The biodiesel goes to a vertical centrifuge in which it is purified and washed, leaving in conditions of use and passing to the commercial circuit for consumption.

The method and the biodiesel fuel that are proposed in this invention offer as advantages, in addition to not having to be extracted from the ground and not having to put up with refinery pollution, as the engine has more uniform combustion owing to its greater lubricating capacity, consumes less fuel, the explosion is quieter, so there is less noise pollution, there is less emission of gases, atmospheric pollution decreases by 80% and the components are less abrasive. Furthermore it is a readily degradable fuel and is very safe for handling. As for the economic saving, its end price can even end up being lower than the end price of the petroleum-derived fuels, if we take into account the price instability of the latter, as well as their cost of refining.

Experience has shown that solutions that are simple and effective, which can be versatile and do not increase the price of the final product, with the possibility of easy maintenance, replacement of worn parts and mass production, predominate in this sector of industry.

The construction and design of all the components are resistant to the medium in which they are used and to the action of the reagents, offering total safety, since although the installation is fully protected by safety devices that prevent any accident, the fact of being composed of modules greatly diminishes the possibility of a major accident.

Accordingly, the versatility of modular construction and the continuous nature of the system provide better performance, and at the same time greater safety.

Although in principle different dimensions or modules will be manufactured concretely, owing to the possibility of the whole for being automated and manufactured by mass production, the dimensions can be adapted with easy mechanization for each concrete requirement, so that modules can be tailor-made. However, as the number of modules depends on the production capacity that it is desired to reach, it will therefore be possible for installations to be tailor-made.

For better understanding of what has been described in the present specification, some schematic drawings are appended, which show, as an example, a practical case of application of the installation and its operation.

In said drawings:

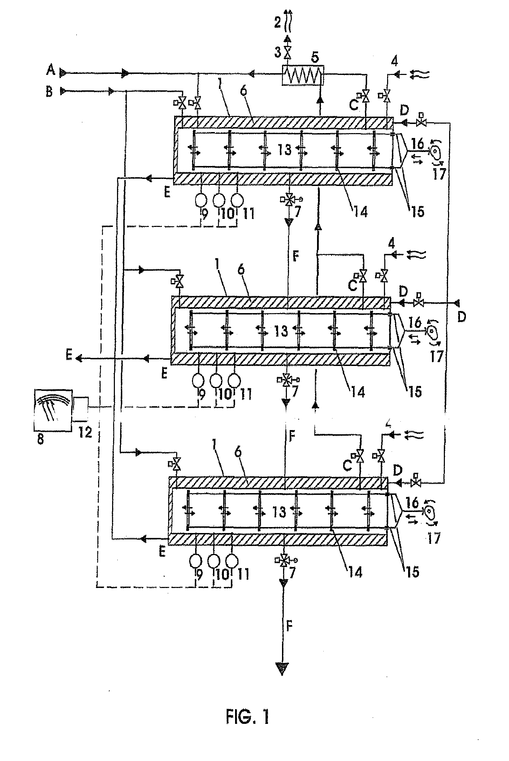

- Fig. 1: Schematic diagram of the first stage or homogenization stage.

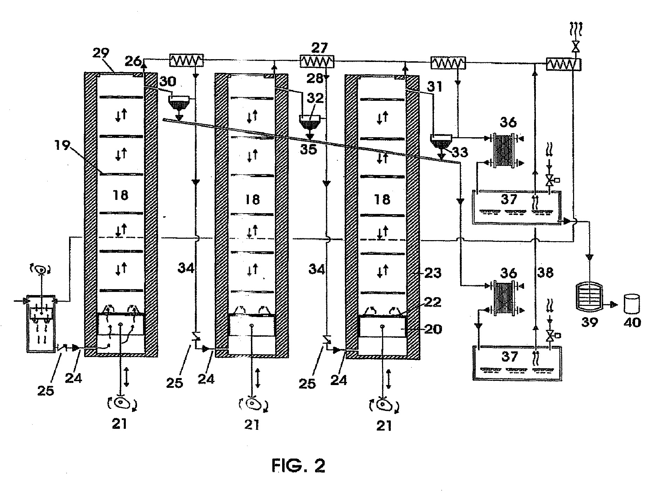

- Fig. 2: Schematic of the second stage or alkaline esterification stage.

The numbered details correspond to:
(1) Homogenization module.
(2) System for evacuation of gases from the homogenizer module.
(3) Control valve for evacuation of gases.
(4) Air injector.
(5) Distillation column.
(6) Jacket for the hot water of the homogenizer module.
(7) Four-way valve
(8) Reactions indicator
(9) Indicator of the pressure sensor
(10) Indicator of the temperature sensor
(11) Filling volume indicator
(12) Electronic circuit controlling the process
(13) Pipe receiving oil plus reagents
(14) Movable collars perforated in the centre
(15) Rods for moving the collars
(16) Piston of the homogenizer module
(17) Motor of the homogenizer module
(18) Transesterification module
(19) Fixed collars perforated in the centre
(20) Piston of the transesterification module
(21) Motor of the transesterification stage
(22) Non-return ports of the piston head
(23) Heating chamber
(24) Inlet pipe to the module
(25) Non-return valve of the inlet pipe
(26) Opening for evacuation of gases
(27) Refrigerated line for condensation of gases
(28) Return of condensed gases
(29) Cover with system for cleaning the module
(30) Top opening for product outlet
(31) Pipe conveying the product
(32) Intermediate tank for glycerol decanting
(33) Density or turbidity sensor of the glycerol tank
(34) Outlet pipe to the next module
(35) Glycerol collector
(36) Heat exchanger for glycerol
(37) Glycerol tank
(38) Pipe for conveying gases from the glycerol tank to the distillation column.
(39) Vertical centrifuge for purification and washing of biodiesel
(40) Tank for biodiesel ready for sale
   A Feed of product to the homogenization module
   B Feed of reagents to the same module
   C Exit of gases from the homogenization module
   D Hot water inlet
   E Hot water outlet
   F Exit of product from the homogenization module

A preferred embodiment of the invention is made up, on the basis of the continuous process installation, from a series of 20 homogenization modules (1) arranged horizontally, constituting the first stage of the process, each functioning as reactor of a mass of vegetable oil of acidity greater than one degree and methanol or ethanol in stoichiometric proportions from 1:50 to 1:300, in relation to the amount of free fatty acids in each oil, submitted to pressure and to temperature varying from 45 to 105 degrees centigrade, in the presence of sulphuric acid as catalyst, at a rate of 1 to 10 grams per kilogram of oil. Each module is provided with a system for extraction of gases (2) linked to passage of the oil from one module to the next, regulated by electronic valve (3) and assisted by air injector (4), that conveys the gases produced by the temperature rise, alcohol and steam, to a distillation column (5) in which the water is lost and the alcohol condenses, the latter being led to the next module, thus recovering this alcohol in the process, in the same proportion as that evacuated.

Each module, with a capacity of 250 kg of vegetable oil, has a covering in the manner of a jacket (6) through which hot water circulates, providing the process with a mean temperature of 60°C with peaks of up to 105°C to facilitate evacuation of the gases.

The modules are joined together by means of four-way valves (7), which permit both vertical and horizontal connection through them, making possible the feed of oil, alcohol, sulphuric acid and air into each module, as well as the exit of gases to the distillation column and the exit of oil to the next module.

Each module includes a reaction control system (8) that indicates the state of the reaction, a pressure sensor (9), a temperature sensor (10) and a filling volume indicator (11), all integrated in an electronic circuit (12) that controls the process. Passage from one module to another is programmed in relation to the rating of the oil, waiting for the reaction to progress, so that between one module and the next there is a gradual decline in the oil rating.

Each module, made of material that is resistant to pressure and to the chemical reagents used, consists of three basic elements: the receiving pipe for oil (13) plus reagents, the heating chamber, already described, that envelops it (6) and a system of collars (14) perforated in the centre and joined together by rods (15) that move uniformly through the pipe (1), actuated by a piston (16) driven by an electric, pneumatic or hydraulic motor (17).

With this first stage, starting from a vegetable oil of variable acidity always greater than one degree, we obtain one with acidity less than one degree.

The second stage of the method, that of transesterification or basic (or alkaline) esterification of the vegetable oil with acidity less than one degree obtained in the preceding stage, is carried out by means of a continuous, multiple, modular vertical reactor in which vegetable oil with -1° of acidity is mixed with sodium or potassium methoxide in stoichiometric proportions from 1:6 to 1:50 at a temperature between 45° and 60°C. Each transesterification module (18) consists of a vertical pipe that incorporates within it a series of fixed but removable collars (19) perforated in the centre through which the oil rises, driven by the piston head (20) actuated by electric motor (21), said piston serving as a non-return valve, keeping open a series of valves with orifices and nozzles (22) on the backstroke, and closed when it moves forward or rises. When the piston head advances (20), as it rises the space of chamber (23) becomes filled with oil, via an inlet pipe (24) provided in its turn with a non-return valve (25). A heating chamber (23) encloses the cylinder of the module in the manner of a jacket, maintaining the product at the working temperature, which as has been described is about 60°C, i.e. a temperature capable of generating vapours in chamber (23) which are evacuated through an opening (26) located in its highest zone and then led through a refrigerated line (27) that condenses the gases for their immediate return (28) once condensed. The chamber includes a special cover (29) for washing and a water inlet and outlet system for washing for purposes of cleaning.

An upper opening (30) connects to a pipe (31) by which the product leaves at at least the same rate as it enters, as already described, and is led to an intermediate tank (32) in which the glycerol phase is decanted. At the bottom of this intermediate tank (32) there is a density or turbidity sensor (33) that is activated in the presence of glycerol, whereas the rest of the product is directed through an outlet pipe (34) to the next module (18) with characteristics similar to that described. The number of modules (18) in this preferred embodiment is 9.

The glycerol is separated throughout this stage, ending up with maximum separation of the two phases, i.e. a product in which the initial oil has disappeared leaving on the one hand biodiesel, and on the other hand glycerol together with salts of the acids used, as well as most of the excess alcohol. The glycerol is collected in a lower collector (35), passes through a heat exchanger (36) and from there to a tank (37) at 80°C, in which the alcohol gases are led by pipes (38) to the distillation column (5) for reuse. This operation is supported by injection of nitrogen.

In the last of the modules (18) that make up this second stage, the biodiesel is obtained, which is already free from glycerol, but contains alcohol residues, and it is passed continuously through a heat exchanger (37) at 80°C, from where it enters a tank (38) and the vapours go via the same gas collecting system to the distillation column (5) in which the methanol or ethanol is recovered for reuse.

The biodiesel is conveyed to a vertical centrifuge (39) in which it is purified and washed, leaving in conditions of use and passing to the commercial circuit (40) for consumption.

## Claims

1. Method of production of biodiesel in a continuous system from vegetable oils of variable acidity, **characterized in that**, in a first stage, vegetable oils of variable acidity are mixed in a continuous, multiple, modular tubular reactor with methanol or ethanol in stoichiometric proportions from 1:50 to 1:300 relative to the amount of free fatty acids present in the medium, in the presence of a strong acid as catalyst, at a rate of 1 to 10 grams per kilogram of oil. Each module has an approximate capacity of between 300 and 400 kg of vegetable oil and consists of three basic elements: the receiving pipe for oil plus reagents, a system of collars perforated in the centre and joined together by rods that move uniformly through the pipe, actuated by a piston driven by a motor* and a covering in the manner of a jacket through which hot water circulates at a temperature of about 60 degrees. Each module is in addition provided with a system for evacuation of gases, steam and methanol or ethanol, which operates periodically and is linked to passage of the oil from one module to the next, controlled by electronic valves and assisted by injection of air, nitrogen or any inert gas, said gases flowing through a pipe that runs from the upper zone of the module to a distillation column in which the water is lost and the alcohol condenses and is returned to the industrial process, to which it is supplied at a rate equivalent to that evacuated.
The modules are joined together by means of four-way or multiple-way valves, which permit both vertical and horizontal connection through them, making possible the feed of oil, methanol, strong acid and air to each module, as well as the outflow of gases to the distillation column and of oil to the next module.
Each module includes a reaction control system that indicates the state of the reaction, a pressure sensor, a temperature sensor and a filling volume indicator, all integrated in an electronic circuit that controls the process.
Passage from one module to another is programmed in relation to the rating of the oil, waiting for the reaction to progress, in such a way that the rating of the vegetable oil gradually decreases between one module and the next. In this first stage, an oil with acidity of less than one degree is obtained from a vegetable oil of high or medium acidity.
In the second stage or stage of transesterification or basic (or alkaline) esterification, the vegetable oil of <1° of acidity obtained in the preceding stage is mixed with sodium or potassium methoxide in stoichiometric proportions from 1:6 to 1:50 at a temperature between 45 and 60°C in a multiple modular vertical reactor, in which each module consists of a vertical pipe made of materials that are resistant to pressure and to the reagents used, that incorporates within it a series of fixed but removable collars, perforated in the centre, through which the oil travels upwards by the thrust of a piston head actuated by a motor, which serves as a non-return valve, and then goes down. During the downstroke of the piston head***, its ports and nozzles remain open, through which the raw material and the reagents pass from the piston chamber to the main chamber of the module, and are closed when it advances or rises. The valves are supplemented with nozzles that facilitate the passage of liquids to the main chamber of the module. An inlet pipe provided in its turn with a non-return valve fills the space of the piston chamber with oil, and empties when the piston head rises. A heating chamber that encloses the cylinder of the module in the manner of a jacket, keeps the zone at the working temperature. As the level of the liquid rises, vapours are generated in the main chamber of the module and are evacuated through a pipe located in the upper zone of the latter with a refrigerated line that condenses the gases for their immediate return once condensed. The chamber includes a special cover for washing as well as a system for inlet and outlet of water for purposes of cleaning.
An upper opening connects to a pipe by which the product leaves at at least the same rate as it enters, and is led to an intermediate tank in which the glycerol phase is decanted. At the bottom of this intermediate tank there is a density or turbidity sensor that is activated in the presence of glycerol, permitting it to be discharged to a collector in which the glycerol collected in all the modules is collected. The intermediate tank also has a pipe at the top, through which the product passes to the next module with characteristics similar to that described. The number of modules depends on the industrial production capacity.
The glycerol is separated throughout this stage, ending up with maximum separation of the two phases, i.e. a product in which the initial oil has disappeared leaving on the one hand biodiesel, and on the other hand glycerol together with salts of the acids used, as well as most of the excess alcohol. The glycerol collected in the collector passes through a heat exchanger and from there to a tank at 80°C, in which the alcohol gases are separated and are led by pipes to the distillation column. This operation is supported by injection of air, nitrogen or any other inert gas.
In the last of the modules that make up this second stage, the biodiesel separated from glycerol but containing alcohol residues leaves and is passed through a heat exchanger at 80°C and goes into a tank, in which the alcohol gases are separated from the biodiesel and are also sent to the distillation column, in which the alcohol is recovered for reuse.
The biodiesel is conveyed to a vertical centrifuge in which it is purified and washed, leaving in conditions of use and passing to the commercial circuit for consumption.

2. Method of production of biodiesel in a continuous system from vegetable oils of variable acidity, according to Claim 1, **characterized in that** it starts from animal fats of more than one degree of acidity instead of vegetable oils, similar results being obtained.

3. Method of production of biodiesel in a continuous system from vegetable oils of variable acidity, according to Claim 1, **characterized in that**, in the first stage, the mixture of oil and methanol or ethanol is submitted to pressure and temperature in the presence of sulphuric acid as strong acid.

4. Method of production of biodiesel in a continuous system from vegetable oils of variable acidity, according to Claim 1, **characterized in that** methanol or ethanol is used in the first stage. ****(N.B. This is correct)

5. Method of production of biodiesel in a continuous system from vegetable oils of variable acidity, according to Claim 1, **characterized in that** in an embodiment different from that proposed, in which, as is done conventionally, a single reactor is used, with controlled extraction of the gases fractionated over time, by way of novelty it is carried out assisted by injection of air, nitrogen or other inert gas.

6. Method of production of biodiesel in a continuous system from vegetable oils of variable acidity according to Claim 1, **characterized in that** the modules of the reactor constitute a series, the number of which depends on the processing capacity of the industrial plant.

7. Method of production of biodiesel in a continuous system from vegetable oils of variable acidity, according to Claim 1, **characterized in that** the covering in the manner of a jacket through which the hot water circulates that provides the temperature suitable for the process or working temperature, i.e. about 60 degrees, reaches peaks of up to 105°C, to facilitate evacuation of the gases.

8. Method of production of biodiesel in a continuous system from vegetable oils of variable acidity, according to Claim 1, **characterized in that** air, nitrogen or other inert gas is used for promoting the evacuation of gases instead of allowing them to leave by their own inertia. (N.B. We also use air)

9. Method of production of biodiesel in a continuous system from vegetable oils of variable acidity, according to Claim 1, **characterized in that**, in alternative embodiments of the present invention, a hydraulic or pneumatic motor is used for driving the piston of the modules.

10. Method of production of biodiesel in a continuous system from vegetable oils of variable acidity, according to Claim 1, **characterized in that**, in the second stage in which the alcohol gases are separated from the glycerol and are conveyed by pipes to the distillation column, this operation is supported by injection of air, nitrogen or other inert gas instead of allowing them to leave by their own inertia. (N.B. We also use air).

11. Biodiesel obtained by the method described in the preceding claims.
